# EUROPÄISCHE PATENTSCHRIFT

(11) **EP 1 449 027 B1**
(45) Veröffentlichungstag und Bekanntmachung des Hinweises auf die Patenterteilung: **30.01.2008**
(21) Anmeldenummer: 02769912.3
(22) Anmeldetag: 05.09.2002
(51) Int. Cl.: G02F 1/153

(54) **ELEKTROCHROMES FARBSYSTEM**
ELECTROCHROMIC COLOR SYSTEM
SYSTEME DE PEINTURE ELECTROCHROME

(30) Priorität: 30.11.2001 DE 10158801
(43) Veröffentlichungstag der Anmeldung: 25.08.2004
(73) Patentinhaber: SIEMENS AKTIENGESELLSCHAFT, 80333 München (DE)
(72) Erfinder: BRABEC, Christoph, 91054 Erlangen (DE); MEIXNER, Hans, 85540 Haar (DE)
(86) Internationale Anmeldenummer: PCT/DE2002/003294
(87) Internationale Veröffentlichungsnummer: WO 2003/048852

(56) Entgegenhaltungen:
- WO-A-99/39395
- DE-A- 19 856 007
- PATENT ABSTRACTS OF JAPAN vol. 1995, no. 04, 31. Mai 1995 (1995-05-31) & JP 07 005496 A (KIYOTA IWAKI), 10. Januar 1995 (1995-01-10)
- PATENT ABSTRACTS OF JAPAN vol. 1995, no. 04, 31. Mai 1995 (1995-05-31) & JP 07 005495 A (KIYOTA IWAKI), 10. Januar 1995 (1995-01-10)

## Beschreibung

Die Erfindung betrifft eine Anordnung und ein Verfahren zum Betrieb eines elektrochromen Farbsystems an nach außen hin sichtbaren Flächen von Objekten.

Die Farbgebung von vielen Produkten spielt bezogen auf das Kaufinteresse der Kunden eine wesentliche Rolle. In vielen Anwendungen zur Farbgebung von Objekten wird gewünscht, dass sich Gegenstände hinsichtlich der nach außen sichtbaren Farbe an die Umgebung anpassen. Dies kann als "Chamäleon"-Effekt bezeichnet werden.

In elektrochromen Farbsystemen kann man die Farbe durch die Dotierung des Farbstoffes ändern. Üblicherweise wir dabei der Aufbau einer elektrochemischen Zelle verwendet. Die Dotierung des elektrochromen Farbstoffes erfolgt durch Anlegen einer äußeren Spannung. Der Schichtaufbau einer elektrochemischen Zelle besteht typischerweise aus einer Elektrode, dem elektrochromen Farbstoff, dem Elektrolyt und einer Gegenelektrode. Eine Versiegelung zwischen den beiden Elektroden ist nötig um einen Verlust des Elektrolyten zu vermeiden. Legt man zwischen den beiden Elektroden eine Spannung an, so beginnen die Ionen des Elektrolyten in den Farbstoff einzudiffundieren und diesen zu oxidieren oder zu reduzieren, was einer p-Dotierung bzw. einer n-Dotierung entspricht. Dies ist abhängig von der Art des Farbstoffs und der angelegten Spannung.

DE 198 56 007 offenbart eine Elektrochrome Anzeigevorrichtung mit einem Fotoempfänger der hinter der Trägerplatte montiert ist. Diese Vorrichtung funktioniert als Berührungssensor und durch eine geeignet konzipierte Auswertelektronik läßt sich die Empfindlichkeit des Berührungssensors auf ein gewünschtes Maß einstellen.

Lösungen für eine variierbare und gleichzeitig vorgebbare O-berflächenfarbe von Objekten sind bisher nicht bekannt.

Der Erfindung liegt die Aufgabe zugrunde ein elektrochromes Farbsystem und ein Betriebsverfahren desselben anzugeben, wo-mit sichtbare Teile von Objekten in ihrer Farbgebung gezielt variiert werden können.

Die Lösung dieser Aufgaben geschieht durch die Merkmalskombinationen entsprechend Anspruch 1 bzw. Anspruch 8.

Vorteilhafte Ausgestaltungen können den Unteransprüchen entnommen werden.

Der Erfindung liegt die Erkenntnis zugrunde dass ein auf einer Objektoberfläche angeordnetes elektrochromes Farbsystem durch externe oder in das Objekt integrierte Fotodetektoren, einfarbig oder mehrfarbig, partiell oder ganzflächig, mit vorgegebenen Farben, Farbmustern oder Bildern versehen werden kann, indem die Farbzellen des Systems von dem Fotodetektor entsprechend angesteuert werden.

Mit einer Mehrzahl von Bildpunkten, sowohl auf der Seite des Fotodetektors, als auch auf der Seite des elektrochromen Farbsystems lassen sich strukturierte Bilder übertragen und darstellen. Insbesondere werden Fotodiodenarrays eingesetzt.

Sind die Fotodetektoren direkt auf den Farbzellen angeordnet, so muss deren Material semitransparent sein um die Farbe der untenliegenden von den Fotodetektoren direkt oder mittelbar angesteuerten Farbzellen nach außen hin sichtbar zu machen.

Durch die benachbarte Darstellung von beispielsweise drei unterschiedlichen Farben an mehreren benachbarten Farbzellen lassen sich bei entsprechender Dimensionierung der Arrays Mischfarben herstellen.

Organische Photodetektoren lassen sich in vorteilhafter Weise basierend auf konjugierten Polymeren, kleinen Molekülen oder Kombinationen daraus semitransparent herstellen.

Aus der Kombination von einem elektrochromen Farbsystem mit einem semitransparenten Array von Photodetektoren, zum Beispiel Kombinationen aus einzelnen Pixeln die für die verschiedenen Farben sensitiv sind (rot, grün, blau ), welcher über das elektrochrome Farbsystem gelegt wird, lässt sich ein intelligentes Farbsystem herstellen, dass die Umgebungsfarbe erkennt und daraufhin seine Farbe anpasst, entsprechend dem "Chamäleon"-Effekt.

Die Verwendung von organischen semitransparenten Photodetektoren erscheint günstig, da dadurch das Detektionssystem über den gesamten Bereich des elektrochromen Farbsystems gelegt werden kann. Es ist jedoch auch die Verwendung von anorganischen Photodetektoren vorstellbar, wie beispielsweise die Verwendung von einzelnen Detektoren die extern positioniert oder separat in das elektrochrome System eingebaut werden.

Insbesondere lässt sich dieses System flexibel herstellen durch die Verwendung und den Aufbau des Farbsystems auf semitransparenten, metallisierten Folien, wie ITO-Folien Weiterhin ermöglicht dieses System eine Farbdifferenzierung oder eine Farbzellengruppierung, beispielsweise eine Pixelierung, indem einzelne solcher elektrochromen Farbelemente auf einem gemeinsamen Träger miteinander verschaltet werden.

Es sind somit durch die Erfindung Systeme erzielbar, deren elektrochromes Farbsystem durch Signale von einem externen oder an den Farbzellen integrierten farbsensitiven Fotosensor ansteuerbar ist.

In einer vorteilhaften Ausgestaltung wird ein semitransparentes Photodiodearray mit einem elektrochromen Farbsystem kombiniert bzw. integriert.

Im Folgenden werden anhand von schematischen die Erfindung nicht einschränkenden Figuren Ausführungsbeispiele beschrieben:

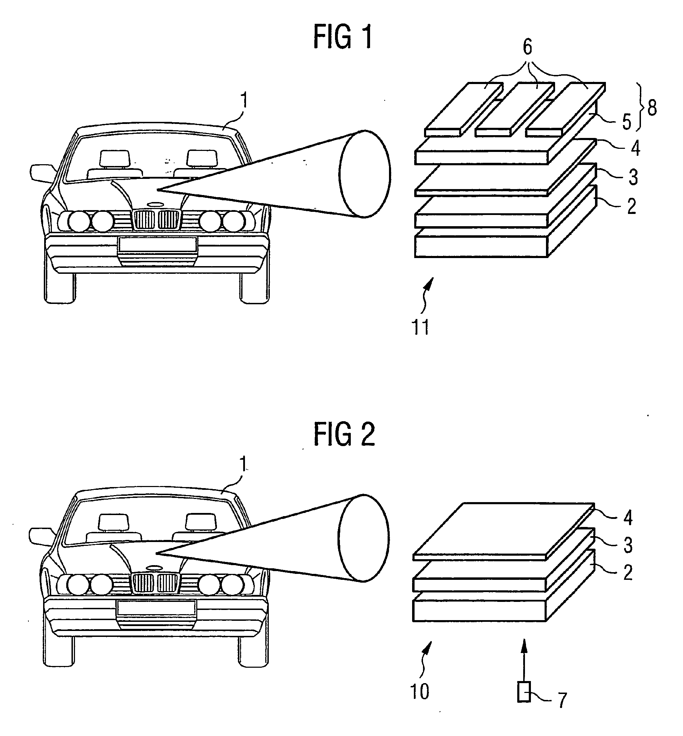

- Figur 1: zeigt eine Objektoberfläche (1) mit einer vergrößert dargestellten Farbzellen (11) mit Fotodetektor,
- Figur 2: zeigt eine Darstellung entsprechend Figur 1 mit einem externen Fotodetektor.

In elektrochromen Farbsystemen kann man die Farbe durch die Dotierung des Farbstoffes ändern. Üblicherweise wir dabei der Aufbau einer elektrochemischen Zelle verwendet, die Dotierung des elektrochromen Farbstoffes erfolgt durch Anlegung einer Spannung. Der Schichtaufbau einer elektrochemische Zelle besteht typischerweise aus einer Elektrode, dem elektrochromen Farbstoff, dem Elektrolyt und einer Gegenelektrode, eine Versiegelung zwischen den beiden Elektroden ist nötig um einen Verlust des Elektrolyts zu vermeiden. Legt man zwischen den beiden Elektroden eine Spannung an, so beginnen die Ionen des Elektrolyts in den Farbstoff einzudiffundieren und diesen zu oxidieren (p Dotierung) oder zu reduzieren (n- Dotierung) , je nach Art des Farbstoffs und der angelegten Spannung.

Organische Photodetektoren, basierend auf konjugierten Polymeren, kleinen Molekülen oder Kombinationen daraus, lassen sich semitransparent herstellen.

Aus der Kombination von einem elektrochromen Farbsystem mit einem semitransparenten Array von Photodetektoren, beispielsweise der Kombinationen aus einzelnen Pixeln die für die verschiedenen Farben sensitiv sind (rot, grün, blau (RGB)), der über das elektrochrome Farbsystem gelegt wird, lässt sich ein intelligentes Farbsystem herstellen, dass die Umgebungsfarbe erkennt und daraufhin seine Farbe anpasst. Dies entspricht einem "Chamäleon"-Effekt.

Die Verwendung von organischen semitransparenten Photodetektoren erscheint günstig, da dadurch das Detektionssytem über den gesamten Bereich des elektrochromen Farbsystems gelegt werden kann. Es ist jedoch auch die Verwendung von anorganischen Photodetektoren vorstellbar, wie die Verwendung von einzelnen Detektoren die separat in das elektrochrome System eingebaut werden.
Insbesondere lässt sich dieses System flexibel herstellen durch die Verwendung und den Aufbau des Farbsystems auf semitransparenten, metallisierten Folien, beispielsweise ITO Folien.

Insbesondere lässt dieses System eine Pixelierung zu, indem einzelne solcher elektrochromen Farbelemente auf einem gemeinsamen Träger miteinander verschaltet werden.

Besondere Vorteile ergeben sich aus der Integration eines semitransparenten Photodiodearrays mit einem elektrochromen Farbsystem.

Ein intelligentes Farbsystem, das seine Farbe auf Wunsch verändert oder an die Umgebung anpasst, beispielsweise in Verbindung mit Wänden, Autos, usw., die hergestellt sind durch die Kombination von einem elektrochromen Farbsystem mit Photodetektoren, insbesondere durch die Kombination von einem elektrochromen Farbsystem, basierend auf konjugierten Polymeren mit organischen, semitransparenten Photodetektoren.

Wird dieses "intelligente", selbstadaptierende Farbsystem pixeliert ausgeführt, lässt sich noch eine weitere Anwendung definieren: eine vollfarbige Kopiereinheit. Das semitransparente, pixelierte Detektionssystem "schreibt" dabei das gemessene Umgebungsbild in das elektrochrome Farbsystem.

## Patentansprüche

1. Elektrochromes Farbsystem zur variierbaren Farbgebung an einer Objektoberfläche (1),
- das punktweise oder flächig in Form von mindestens einer Farbzelle (10) am Objekt angebracht ist,
- dessen Farbzelle (10) aufeinanderfolgend aus einer ersten Elektrode (2), einer elektrochromen Farbschicht (3) und einer zweiten Elektrode (4) besteht,
- das durch mindestens einen Fotodetektor (7,8) derart ansteuerbar ist, dass eine oder mehrere Farbzellen (10) eine Farbe annehmen, die der vom Fotodetektor (7,8) detektierten Farbe entspricht.

2. Elektrochromes Farbsystem nach Anspruch 1, bei dem der Fotodetektor (7) eine Anordnung mit einer Vielzahl von Bildpunkten zur zweidimensionalen Auflösung einer Objektszene aufweist.

3. Elektrochromes Farbsystem nach Anspruch 1, bei dem eine Farbzelle (11) mit einem Fotodetektor (8) kombiniert ist und dargestellt wird durch eine auf einer Elektrode (2,4) der Farbzelle (11) aufgebaute semitransparente Fotodetektorschicht (5) und eine darauf folgende semitransparente dritte Elektrode (6).

4. Elektrochromes Farbsystem nach Anspruch 3, bei dem die dritte Elektrode (6) des Fotodetektors (8) mehrfach unterteilt und die jeweiligen Einzelelektroden separat ansteuerbar sind.

5. Elektrochromes Farbsystem nach einem der vorhergehenden Ansprüche, bei dem ein flächig ausgebildetes Objekt zumindest teilweise durch eine Vielzahl von zusammenhängenden Farbzellen (10,11) dargestellt ist.

6. Elektrochromes Farbsystem nach einem der vorhergehenden Ansprüche, bei dem fotosensitive Schichten der Fotodetektoren (7,8) aus organischen Materialien bestehen.

7. Elektrochromes Farbsystem nach Anspruch 6, bei dem die organischen Materialien konjugierte Polymere sind.

8. Verfahren zum Betrieb eines elektrochromen Farbsystems entsprechend einem der Ansprüche 1 bis 7, bestehend aus
- der Aufnahme eines ein oder mehrfarbigen Bildes durch einen an das elektrochrome Farbsystem angeschlossenen Fotosensor (7) und
- der Ansteuerung des elektrochromen Farbsystems zur Darstellung des Bildes auf einer mit dem elektrochromen Farbsystem ausgestatteten Objektes.

9. Verfahren nach Anspruch 8, bei dem an einer Farbzelle (11) mehrere Farben durch die Ansteuerung von Einzelelektroden mit unterschiedlichen Spannungen erzeugt werden.

10. Verfahren nach Anspruch 8 oder 9, bei dem ein von Fotodetektoren (8), die auf Farbzellen (11)angebracht sind, aufgenommenes Umgebungsbild in das untenliegende elektrochrome Farbsysteme kopiert wird.

11. Verwendung eines elektrochromen Farbsystems nach einem der Ansprüche 1 bis 7 zur Farbgebung bei Objekten in der Architektur, an Fahrzeugen oder bei Textilien.

## Claims

1. Electrochromic colour system for applying to an object surface (1) a colour which can be varied,
- the system being applied to the object at points or over an area of at least one colour cell (10),
- in which the colour cells (10) consist of a first electrode (2), an electrochromic colour layer (3) and a second electrode (4) in succession,
- which can be controlled by at least one photodetector (7,8), in such a way that one or more colour cells (10) adopt a colour which corresponds to the colour detected by the photodetector (7,8).

2. Electrochromic colour system in accordance with claim 1, in which the photodetector (7) has an arrangement with numerous image points for the two-dimensional resolution of an object scene.

3. Electrochromic colour system in accordance with claim 1, in which a colour cell (11) is combined with a photodetector (8) and is represented by a semi-transparent photodetector layer (5), built up on one electrode (2,4) of the colour cell (11), and following it a semi-transparent third electrode (6).

4. Electrochromic colour system in accordance with claim 3, in which the third electrode (6) of the photodetector (8) has numerous subdivisions, and each of the individual electrodes can be controlled separately.

5. Electrochromic colour system in accordance with one of the preceding claims, in which at least part of an object with a sheet construction is represented by numerous connected colour cells (10, 11).

6. Electrochromic colour system in accordance with one of the preceding claims, in which photosensitive layers of the photodetectors (7,8) consist of organic materials.

7. Electrochromic colour system in accordance with claim 6, in which the organic materials are conjugated polymers.

8. Method for operating an electrochromic colour system corresponding to one of the claims 1 to 7, comprising
- the detection of a monochromic or multi-colour image by a photosensor (7) connected to the electrochromic colour system, and
- the control of the electrochromic colour system so as to reproduce the image on an object which is provided with an electrochromic system.

9. Method in accordance with claim 8, in which several colours are produced at a colour cell (11) by driving individual electrodes at different voltages.

10. Method in accordance with claim 8 or 9, with which an image of the environment, detected by photodetectors (8) attached to the colour cells (11), is copied into the underlying electrochromic colour system.

11. Use of an electrochromic colour system in accordance with one of claims 1 to 7 for applying colour to objects in architecture, on vehicles or to textiles.

## Revendications

1. Système de couleur électrochrome pour la coloration variable sur une surface d'objet (1),
- qui est appliqué sur l'objet par points ou en surface sous forme d'au moins une cellule de couleur (10),
- dont la cellule de couleur (10) est constituée successivement d'une première électrode (2), d'une couche de couleur électrochrome (3) et d'une deuxième électrode (4),
- qui est commandable par au moins un photodétecteur (7, 8) de telle manière qu'une ou plusieurs cellules de couleur (10) prennent une couleur correspondant à la couleur détectée par le photodétecteur (7, 8).

2. Système de couleur électrochrome selon la revendication 1, dans lequel le photodétecteur (7) présente un dispositif ayant une pluralité de points d'image pour la résolution bidimensionnelle d'une scène d'objet.

3. Système de couleur électrochrome selon la revendication 1, dans lequel une cellule de couleur (11) est combinée à un photodétecteur (8) et représentée par une couche de photodétecteur (5) semi-transparente, posée sur une électrode (2, 4) de la cellule de couleur (11) et une troisième électrode (6) semi-transparente suivante.

4. Système de couleur électrochrome selon la revendication 3, dans lequel la troisième électrode (6) du photodétecteur (8) est divisée plusieurs fois et les électrodes individuelles respectives sont commandables séparément.

5. Système de couleur électrochrome selon l'une quelconque des revendications précédentes, dans lequel un objet formé de manière plane est représenté au moins en partie par une pluralité de cellules de couleur (10, 11) cohérentes.

6. Système de couleur électrochrome selon l'une quelconque des revendications précédentes, dans lequel des couches photosensibles des photodétecteurs (7, 8) sont constituées de matières organiques.

7. Système de couleur électrochrome selon la revendication 6, dans lequel les matières organiques sont des polymères conjugués.

8. Procédé destiné au fonctionnement d'un système de couleur électrochrome selon l'une quelconque des revendications 1 à 7, comprenant
- la prise d'une image monochrome ou multichrome au moyen d'un photocapteur (7) raccordé au système de couleur électrochrome, et
- la commande du système de couleur électrochrome pour la représentation de l'image sur un objet équipé du système de couleur électrochrome.

9. Procédé selon la revendication 8, dans lequel plusieurs couleurs sont générées sur une cellule de couleur (11) par la commande d'électrodes individuelles avec différentes tensions.

10. Procédé selon la revendication 8 ou 9, dans lequel une image environnement, prise par des photodétecteurs (8) installés sur les cellules de couleur (11), est copiée dans le système de couleur électrochrome situé en bas.

11. Utilisation d'un système de couleur électrochrome selon l'une quelconque des revendications 1 à 7, destiné à la coloration d'objets en architecture, sur des véhicules ou pour des textiles.
